# EUROPÄISCHE PATENTANMELDUNG

(11) **EP 2 644 490 A2**
(43) Veröffentlichungstag der Anmeldung: **02.10.2013**
(21) Anmeldenummer: 13001525.8
(22) Anmeldetag: 25.03.2013
(51) Int. Cl.: B62K 21/26

(54) **Fahrradgriff**

(30) Priorität: 28.03.2012 DE 102012006168
(71) Anmelder: Westphal GmbH, 33719 Bielefeld (DE)
(72) Erfinder: Struthoff, Anne, 33813 Oerlinghausen (DE)
(74) Vertreter: Brandt, Detlef

(57) **Zusammenfassung**

Es wird ein Fahrradgriff mit einem rohrförmigen Grundkörper (1), welcher einen Befestigungsbereich (5) zur Klemmung des Fahrradgriffes auf einer Lenkstange aufweist, einem den Grundkörper (1) umschließenden Griffelement (2) und einem Griffelement (1) und Grundkörper (2) im Befestigungsbereich (5) verbindenden Klemmringelement (3) vorgestellt, bei der erfindungsgemäß benachbart des Befestigungsbereiches (5) ein separater durch Grundkörper (1) und Griffelement (2) ausgebildeter Federbereich (4) zur elastischen Aufnahme radial wirkender Kräfte am Fahrradgriff angeordnet ist.

## Beschreibung

### Technisches Umfeld

Die Erfindung betrifft einen Fahrradgriff mit einem rohrförmigen Grundkörper, welcher mindestens einen Befestigungsbereich zur Klemmung des Fahrradgriffes auf einer Lenkstange aufweist, einem den Grundkörper umschließenden Griffelement und einem im Befestigungsbereich Griffelement und Grundkörper verbindenden Klemmringelement.

### Stand der Technik

Fahrradgriffe sind im Stand der Technik in mannigfaltiger Ausgestaltung bekannt. Sie sollen durch eine Erhöhung der Griffigkeit der Lenkstange eines Fahrrades dessen Manövrierfähigkeit und Handhabbarkeit erleichtern. Darüber hinaus besteht insbesondere in neuerer Zeit insbesondere auch durch die verstärkte Verwendung von Fahrrädern als Sportgerät - beispielsweise als Mountainbike - der Wunsch, im Bereich der Ballenauflage der Hand des Fahrradnutzers an der Lenkstange eine Feder- und Dämpferwirkung zu erzeugen.

Zur Erzielung dieses Zwecks sind beispielsweise Fahrradgriffe konstruiert worden, die an ihrem Außenumfang Ober den eigentlichen Griffumfang vorstehende Handballenauflagen aufweisen. Die Handballenauflagen dienen zur Abfederung von Kräften und sind zu diesem Zweck in aller Regel aus elastischem Kunststoffmaterial gefertigt.

Voraussetzung für die Bereitstellung einer entsprechenden Federwirkung ist die Tatsache, dass der regelmäßig mit einem inneren zylinderförmigen Raum zum Aufschieben auf die äußeren Enden der Lenkstange versehene Fahrradgriff verdrehfest angeordnet ist, damit die Handballenauflage durch eine Drehbewegung in sich eine Federwirkung erzielen kann.

Die Technik hat deshalb bislang durch unterschiedliche Ausgestaltung von Fahrradgriffen versucht, eine feste Verbindung zwischen Fahrradgriff und Lenkstange herzustellen.

Eine derartige feste Verbindung kann beispielsweise dadurch herbeigeführt werden, dass ein aus mehreren ineinander geschachtelten rohrförmigen Bauteilen gebildeter Fahrradgriff am innersten Bauteil mit einer Anzahl von Schlitzen versehen wird. Diese Schlitze dienen zum einen der Anpassung des Innendurchmessers des betreffenden Griffteiles an unterschiedliche Außendurchmesser zugehöriger Lenkstangen, gleichzeitig soll durch die radiale Verkleinerung der Schlitze infolge eines Zusammenpressens durch eine das Innenteil umgebende Außenschale eine ausreichende Reibkraft zwischen Fahrradgriff und Lenkstange herbeigeführt werden.

So ist zum Beispiel zum Stand der Technik in der DE 20 2008 011 773 U1 ein Fahrradgriff offenbart, der eine ein Lenkerrohr umgebende Hülse umfasst, wobei die Hülse wiederum von einem Greifelement umgeben ist. Für eine klemmende Befestigung des Fahrradgriffs auf dem Lenkerrohr ist die Hülse endseitig mit einem Gewinde versehen, auf welches eine Befestigungsmutter aufgeschraubt wird. Im Bereich des endseitig angeordneten Gewindes ist die Hülse mit mehreren spiralförmig verlaufenden Schlitzen versehen, so dass beim Aufschrauben der Befestigungsmutter die Klemmung durch Zusammenpressen des Gewindeteils erleichtert wird.

Die beschriebenen Konstruktionen erfüllen ohne Zweifel die Aufgabe einer sicheren verdrehfesten Verbindung zwischen Fahrradgriff und Lenkstange. Die eingangs beschriebenen Wünsche nach einer größeren Federwirkung eines Fahrradgriffes werden jedoch durch die eingangs beschriebene Möglichkeit einer asymetrischen durch Eigenelastizität verdrehbaren Handballenauflage nicht erfüllt.

### Aufgabe der Erfindung

Ausgehend von den geschilderten Nachteilen des Standes der Technik besteht die erfindungsgemäße Aufgabe darin, einen Fahrradgriff der oben beschriebenen gattungsgemäßen Art so weiter zu entwickeln, dass signifikant höhere Federkräfte vom Fahrradgriff aufgenommen werden können als dies bislang der Fall ist. Darüber hinaus soll die Konstruktion selbstverständlich einfach und kostengünstig herstellbar sein. Letztendlich besteht auch die Anforderung darin, den erfindungsgemäßen Fahrradgriff einfach auf das Ende einer Fahrradlenkstange aufschieben und anschließend verdrehsicher auf ihr festlegen zu können.

### Lösung der Aufgabe

Diese Aufgabe wird erfindungsgemäß für den im gattungsbildenden Teil des Anspruches 1 beschriebenen Fahrradgriff durch die im kennzeichnenden Teil des beschriebene technische Lehre gelöst.

Erfindungswesentlich dabei ist es, dass benachbart des Befestigungsbereiches ein durch Grundkörper und Griffelement unabhängig ausgebildeter Federbereich zur elastischen Aufnahme radial wirkender Kräfte am Griffelement angeordnet ist.

Durch die erfindungswesentliche Trennung des für die Befestigung vorgesehenen Bereiches am Fahrradgriff von einem hiervon unabhängigen Federbereich ist eine optimale konstruktive Ausgestaltung zur Lösung der jeweiligen Aufgabenstellungen, die durch einen Fahrradgriff gelöst werden sollen, gewährleistet.

Besondere Ausgestaltung des Gegenstandes der Erfindung ergeben sich in Ergänzung der im Anspruch offenbarten technischen Lehre zusätzlich aus den auf den Hauptanspruch rückbezogenen Merkmalen der Unteransprüche.

Es hat sich für die Gestaltung des Federbereiches als besonders vorteilhaft erwiesen, wenn der Grundkörper des Federbereiches eine Mehrzahl von parallel zu seiner Mittellängsachse tangential beabstandet angeordneten Längsnuten aufweist, wobei der Innendurchmesser des rohrförmigen Grundkörpers geringfügig größer ist als der Außendurchmesser einer zu bestückenden Lenkstange. Durch die geschilderte Gestaltung kann der Federbereich des Fahrradgriffs sich ausgehend von dem auf der Lenkstange festgelegten Befestigungsbereich gegenüber diesem radial verdrehen, um auf diese Weise eine Federwirkung zu erzielen. Gleichzeitig gewährleisten die Längsnuten infolge der angreifenden Griffkräfte eine Andruckwirkung auf der Oberfläche der Lenkstange, so dass eine degressive Federwirkung eintritt, je stärker eine Verdrehung des Federbereiches des Fahrradgriffes herbeigeführt wird.

Zusätzlich vorteilhaft kann es sein, wenn das Griffelement an seiner den Grundkörper umschließenden Innenwandung im Federbereich zu den Längsnuten in ihrer Größe korrespondierende Stege aufweist, welche im zusammengesetzten Zustand des Fahrradgriffes in die Längsnuten eingreifen. Durch die Ausfüllung der Längsnuten mit dem Material des außen liegenden Griffelementes lässt sich je nach Festlegung des jeweiligen Materials von Griffelement und Grundkörper eine abgestufte Federwirkung erzielen. Das Material des Griffelementes besteht dabei vorteilhafter Weise aus Weich-PVC, wohingegen der Grundkörper aus Hart-PVC besteht. Das Zusammenspiel der innen und außen liegenden Werkstoffe unterschiedlicher Viskositäten führt dazu, dass zunächst eine leichte Verdrehung und somit eine relativ hohe Federwirkung infolge des weichen außen liegenden und in die Längsnuten eingreifenden Weich-PVC-Materials herbeigeführt wird. Ist dieses Material entsprechend zusammengepresst, so überträgt sich eine weitergehende auf den Fahrradgriff wirkende Kraftkomponente auf die jeweiligen in Verdrehungsrichtung liegenden Kantenbereiche der Längsnuten und bewirkt dort auch eine Verdrehung des innen liegenden Grundkörpers. Durch die Verdrehung des Grundkörpers wird die Breite der Längsnuten verkleinert, wobei naturgemäß für die Verkleinerung aufgrund des weniger elastischen Materials erhöhte Einwirkkräfte erforderlich sind. Somit ergibt sich eine Versteifungswirkung bei der Verdrehung des Federbereiches des Fahrradgriffes, was insbesondere bei Verwendung von Fahrrädern im sportlichen Bereich äußerst erwünscht ist.

Zur Erleichterung der Herstellung hat es sich darüber hinaus als vorteilhaft erwiesen, wenn Grundkörper und Griffelement durch einen Spritzgießvorgang miteinander einstückig ausgebildet werden. Eine Federwirkung, wie sie in der Praxis gewünscht ist, ergibt sich entsprechend einer vorteilhaften Weiterbildung des Gegenstandes der Erfindung dann, wenn die Längsnuten sich über mindestens 70 % der Gesamtlänge des Grundkörpers erstrecken. Die verbleibenden 30 % dienen der Ausbildung des Befestigungsbereiches und reichen in aller Regel aus, den Fahrradgriff zuverlässig an der Lenkstange zu fixieren.

Praktische Versuche haben gezeigt, dass eine optimale Federwirkung durch Ausbildung der Längsnuten mit einer Breite im Bereich von 0,5 bis 3 mm erzielt werden kann.

Gleichzeitig hat die Praxis gezeigt, dass in unbelastetem Zustand des Fahrradgriffes das Durchmesserinnenmaß des Grundkörpers im Bereich von 0,4 bis 1 mm größer bemessen sein sollte als der Innendurchmesser einer zu bestückenden Lenkstange. Das angegebene Maß bezieht sich selbstverständlich vorrangig auf den Federbereich.

Die Aufnahme von Kräften von der Handfläche des Fahrradnutzers kann dadurch unterstützt werden, dass das Griffelement an seiner Außenkontur mit einer einseitig über den Durchmesser vorstehenden Handauflagefläche versehen ist. Durch die Handauflagefläche wird eine außermittig befindliche Kraftangriffsfläche geschaffen, die aufgrund ihrer Hebelwirkung eine Verdrehung des Fahrradgriffs durch angreifende Handkräfte erleichtert.

Um den Fahrradgriff zuverlässig an einer Lenkstange festzulegen, hat es sich darüber hinaus als vorteilhaft erwiesen, das Klemmringelement mit einem Innenkonus und den Grundkörper in seinem Befestigungsbereich mit einem korrespondierenden Außenkonus auszustatten. Der Innenkonus des Klemmringelementes wird im Rahmen des Befestigungsvorganges durch eine Axialzugvorrichtung auf den Außenkonus des Griffkörpers gezogen und dort gehalten. Durch die Konusausbildung werden dabei in Umfangsrichtung zentral auf die Durchmessermitte der Lenkstange wirkende Haltekräfte erzeugt, die eine zuverlässige Festlegung des Fahrradgriffes ermöglichen. Die Festlegung kann darüber hinaus dadurch unterstützt werden, dass der Außenkonus des Grundkörpers im Befestigungsbereich mindestens mit einem parallel zur Mittellängsachse umlaufenden Klemmschlitz versehen ist. Durch den oder die Klemmschlitze wird das Zusammenpressen des Grundkörpers im Befestigungsbereich erleichtert, was ein leichteres Aufschrauben und Festlegen des Klemmringelementes bewirkt. Selbstverständlich können mehrere auf den Umfang gleichmäßig verteilte Klemmschlitze den Befestigungsvorgang zusätzlich erleichtern.

### Figurenbeschreibung

Nachfolgend wird ein Ausführungsbeispiel des Gegenstandes der Erfindung anhand der beigefügten Zeichnungen näher erläutert. Es zeigt:
- Figur 1: eine Draufsicht auf den Grundkörper des erfindungsgemäßen Fahrradgriffs
- Figur 2: eine Seitenansicht des Grundkörpers entsprechend des Pfeils A aus Figur 1
- Figur 3: eine Schnittdarstellung durch das Griffelement mit innenliegenden Grundkörper des erfindungsgemäßen Fahrradgriffes
- Figur 4: eine Schnittdarstellung durch den erfindungsgemäßen Fahrradgriff entsprechend der Linie B-B aus Figur 3 im uneingefederten und eingefederten Zustand und
- Figur 5: eine Schnittdarstellung durch das Klemmringelement des erfindungsgemäßen Fahrradgriffs

Der in den Figuren in seinen Einzelteilen dargestellte erfindungsgemäße Fahrradgriff besteht im wesentlichen aus drei Komponenten, dem Grundkörper 1, dem Griffelement 2 sowie dem Klemmringelement 3. Das Klemmringelement 3 dient zur Festlegung des Fahrradgriffes auf einem freien Ende einer Fahrredlenkstange.

Im zusammengebauten Zustand bilden Grundkörper 1, Griffelement 2 und Klemmringelement 3 eine Baueinheit. Grundkörper 1 und Griffelement 2 werden entsprechend einer vorteilhaften Ausbildung aus Materialien unterschiedlicher Elastizität ausgebildet und in einem Spritzgießvorgang zu einem gemeinsamen Bauteil ausgeformt.

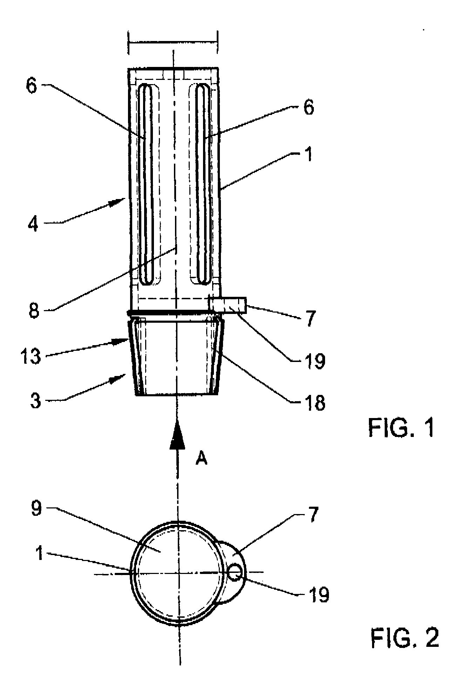

Der in der Figur 1 im einzelnen dargestellte Grundkörper besitzt zwei in Richtung der Mittellängsachse 8 des Bauteils nebeneinander angeordnete Bereiche, die unterschiedliche Aufgaben zu erfüllen haben.

Es handelt sich hierbei zum einen um den Befestigungsbereich 5, der zur Festlegung des Fahrradgriffes auf der Lenkstange dient. Neben dem Befestigungsbereich 5 befindet sich erfindungsgemäß ein Federbereich 4, der aufgrund seiner speziellen Ausbildung dazu dient, auf den Fahrradgriff durch den Fahrradnutzer einwirkende Haltekräfte abzufedem, so dass insbesondere bei im sportlichen Bereich tätigen Fahrradfahrern die Beanspruchung von Hand-, Ellenbogen- und Schultergelenken herabgesetzt wird.

Um diese Federwirkung zu erzielen, ist der Federbereich 4 mit einer Mehrzahl von Längsnuten 6 ausgestattet. Die Längsnuten 6 sind parallel zueinander und zur Mittellängsachse 8 radial umlaufend in in vorteilhafter Weise gleichmäßigen Abständen angeordnet. Sie sind dabei so ausgebildet, dass sie von der äußeren Oberfläche des Grundkörpers 1 bis zu einem Innenraum 9 des Grundkörpers durchgehend ausgebildet sind. Der Innenraum 9 dient zur Aufnahme des freien Endes einer Lenkstange.

Um das Aufschieben des Grundkörpers 1 auf die Lenkstange zu erleichtern, ist der Innenraum im Durchmesser geringfügig größer ausgebildet als der Außendurchmesser der zu bestückenden Lenkstange. Der Durchmesserunterschied kann im Bereich von 0,4 mm bis 1,0 mm liegen. Im Trennbereich zwischen Federbereich 4 und Befestigungsbereich 5 des Grundkörpers ist dieser mit einer über den eigentlichen Außendurchmesser des Grundkörpers vorstehenden Haltenase 7 versehen. Die Haltenase 7 ist mit einer Bohrung 19 versehen. An der dem Federbereich 4 gegenüberliegenden Seite der Haltenase 7, in dem sich der Befestigungsbereich 5 befindet, ist der Grundkörper 1 an seiner Außenkontur konusförmig ausgebildet. Auch hier weist der Grundkörper 1 eine Mehrzahl von parallel zur Mittellängsachse 8 beabstandet zueinander ausgebildeten Klemmschlitzen 18 auf.

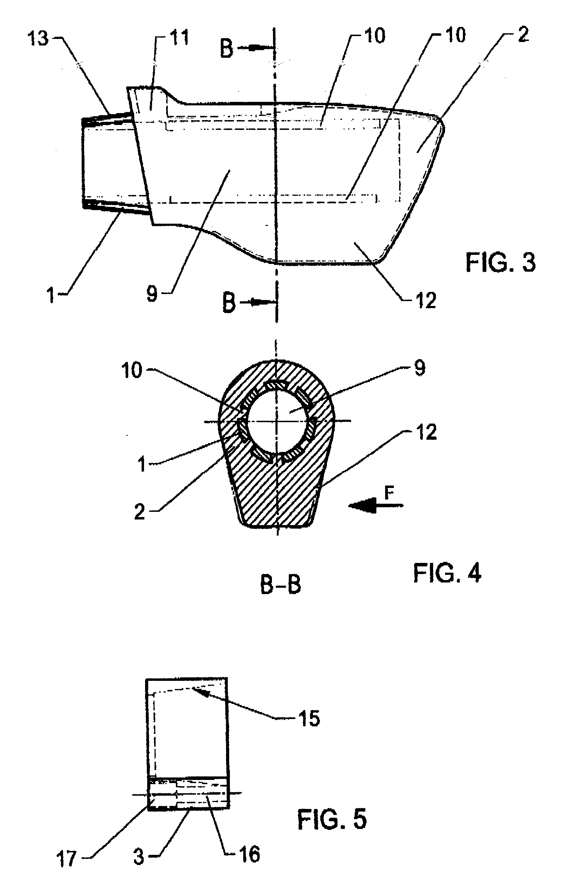

Die konusförmige Ausbildung des Befestigungsbereiches 5 dient zur Aufnahme des Klemmringelementes 3. Das Klemmringelement 3 ist, wie dies insbesondere aus der Figur 5 deutlich wird, mit einer durchgehenden Ausnehmung in Form einer Bohrung versehen, deren innere Oberfläche in Form eines Innenkonus ausgebildet ist. Das Klemmringelement 3 weist darüber hinaus eine neben dem Innenkonus angeordnet Bohrung 16 auf, die an ihrem einen Ende mit einer im Klemmringelement eingearbeiteten Gewindemutter 17 versehen ist.

Die Befestigung des Fahrradgriffes auf der Lenkstange erfolgt dadurch, dass das Klemmringelement 3 nach dem Aufsetzen auf den Außenkonus 13 des Grundkörpers 1 mittels einer in den Figuren nicht dargestellten Schraube in Form einer Axialzugvorrichtung auf den Außenkonus 13 gezogen wird. Durch diese Maßnahme werden Radialkräfte im Bereich des Befestigungsbereiches 5 aufgebracht, die ein Zusammenpressen des Grundkörpers auch aufgrund der Klemmschlitze 18 hervorrufen. Die Klemmwirkung zwischen Außenkonus 13 und Innenkonus 15 kann dabei durch das Anziehen der Befestigungsschraube so groß gewählt werden, dass eine zuverlässige Befestigung des Fahrradgriffes auf der Lenkstange herbeigeführt wird.

Aufgrund des geringfügig größeren Durchmessers des Innendurchmessers des Griffkörpers 1 zum Außendurchmesser der korrespondierenden Lenkstange ist der Fahrradgriff im Bereich des Federbereiches 4 aufgrund seiner elastischen Ausformung verdrehbar. Um die Verdrehung des Fahrradgriffes zu erleichtern, ist dieser an seiner Außenkontur mit einer über den eigentlichen Außendurchmesser des Griffelementes 2 vorstehenden Handauflagefläche 12 versehen. Die Handauflagefläche 12 kann entsprechend der Darstellung der Figur 4 Kräfte in Richtung des Pfeils F aufnehmen, die zu einer Verformung sowohl des Griffelementes 2 als auch des damit verbundenen Grundkörpers 1 im Federbereich 4 führen. Eine Verformung ist schematisch durch die gestrichelte Darstellung des verformten Fahrradgriffes in der Figur 4 angedeutet.

Die Federwirkung und die Übertragung von Kräften vom Griffelement 2, welches aus Weich-PVC (PVC-P) hergestellt ist, auf den innen liegenden, aus Hart-PVC (PVC-V) hergestellten Grundkörper 1 wird dadurch unterstützt, dass an der Innenseite des Griffelementes 2 über die innere zylindrische Bohrung vorstehende Stege 10 angeordnet sind, die in ihrer Ausgestaltung so ausgebildet sind, dass sie in die im Grundkörper 1 vorhandenen Längsnuten 6 eingreifen. Durch diese Ausgestaltung, die eine positive Federwirkung des Fahrradgriffes maßgeblich herbeiführt, kann darüber hinaus die Federwirkung des gesamten Fahrradgriffes konstruktiv beeinflusst werden. Dies geschieht dadurch, dass die Materialien von Grundkörper 1 und Griffelement 2 in ihrer Elastizität aufeinander abgestimmt werden können und darüber hinaus die Breite der Längsnuten 6 und der in die Längsnuten 6 eingreifenden Stege 10 je nach gewünschter Federwirkung anpassbar sind. In der Praxis hat sich eine Breite der Längsnuten im Bereich von 0,5 mm bis 3,0 mm als besonders vorteilhaft erwiesen. Die Größe der Federwirkung kann zusätzlich dadurch beeinflusst werden, dass die Längsnuten 6 und Stege 10 in ihrer Längserstreckung eine gebogene Kontur aufweisen.

Hinsichtlich der konkreten Ausbildung des erfindungsgemäßen Fahrradgriffes hat es sich als vorteilhaft erwiesen, wenn die Längsnuten 6 sich über mindestens 70 % der Gesamtlänge des Grundköpers erstrecken.

Wie aus der Figur 4 ergänzend deutlich wird, kann eine Federwirkung des Fahrradgriffes auch dadurch bewirkt werden, dass sich infolge der aufzubringenden Kräfte F die Breite der Längsnuten 6 innerhalb des Grundkörpers 1 verändert. Dies wird insbesondere dadurch herbeigeführt, dass durch das Umgreifen des Fahrradgriffes durch den Fahrer auch radial zur Lenkerdurchmessermitte wirkende Kräfte aufgebracht werden, die die Federrate des Fahrradgriffes beeinflussen.

Versuche haben gezeigt, dass, je stärker die Verdrehung des Fahrradgriffes in seinem Federbereich 4 ist, desto größer wird der Verdrehwiderstand des Grundkörpers 1, so dass sich eine Verhärtung und somit eine Erniedrigung der Federrate des Fahrradgriffes bei stärkerer Verdrehung ergibt.

Durch die klare Trennung des Fahrradgriffes in zwei unterschiedliche Bereiche zur Erfüllung verschiedener Aufgaben lässt sich für jede Aufgabe eine optimale Problemlösung bereitstellen, wie dies aus der Beschreibung und den Figuren hervorgeht. Der erfindungsgemäße Fahrradgriff stellt somit eine grundlegende Verbesserung der ergonomischen Bedingungen im Bereich des Fahrradlenkers dar.

**Bezugszeichenliste**

| | |
|---|---|
| 1 | Grundkörper |
| 2 | Griffelement |
| 3 | Klemmringelement |
| 4 | Federbereich |
| 5 | Befestigungsbereich |
| 6 | Längsnut |
| 7 | Haltenase |
| 8 | Mittellängsachse |
| 9 | Innenraum Grundkörper |
| 10 | Steg |
| 11 | Schraubenhalteelement |
| 12 | Handauflagefläche |
| 13 | Außenkonus |
| 14 | Gewindebereich |
| 15 | Innenkonus |
| 16 | Bohrung |
| 17 | Gewindemutter |
| 18 | Klemmschlitz |
| 19 | Bohrung |

## Patentansprüche

1. Fahrradgriff mit einem rohrförmigen Grundkörper (1), welcher einen Befestigungsbereich (5) zur Klemmung des Fahrradgriffes auf einer Lenkstange aufweist, einem den Grundkörper (1) umschließenden Griffelement (2) und einem Griffelement (1) und Grundkörper (2) im Befestigungsbereich (5) verbindenden Klemmringelement (3),
**dadurch gekennzeichnet, dass**
benachbart des Befestigungsbereiches (5) ein separater durch Grundkörper (1) und Griffelement (2) ausgebildeter Federbereich (4) zur elastischen Aufnahme radial wirkender Kräfte am Fahrradgriff angeordnet ist.

2. Fahrradgriff nach Anspruch 1,
**dadurch gekennzeichnet, dass**
der Grundkörper (1) im Federbereich (4) eine Mehrzahl von parallel zu seiner Mittellangsachse (8) tangential beabstandet angeordneten Längsnuten (6) aufweist, wobei der Innendurchmesser des rohrförmigen Grundkörpers (1) geringfügig größer ist als der Außendurchmesser der zu bestückenden Lenkstange.

3. Fahrradgriff nach Anspruch 2,
**dadurch gekennzeichnet, dass**
das Griffelement (2) an seiner den Grundkörper (1) umschließenden Innenwandung im Federbereich (4) in ihrer Größe zu den Längsnuten (6) korrespondierende Stege (10) aufweist, welche im zusammengesetzten Zustand des Fahrradgriffs in die Längsnuten (6) eingreifen.

4. Fahrradgriff nach einem oder mehreren der Ansprüche 1 bis 2,
**dadurch gekennzeichnet, dass**
das Griffelement (2) aus Weich-PVC (PVC-P) besteht.

5. Fahrradgriff nach einem oder mehreren der Ansprüche 1 bis 3,
**dadurch gekennzeichnet, dass**
der Grundkörper (1) aus Hart-PVC (PVC-V) besteht.

6. Fahrradgriff nach einem oder mehreren der Ansprüche 1 bis 5,
**dadurch gekennzeichnet, dass**
Grundkörper (1) und Griffelement (2) durch einen Spritzgießvorgang miteinander einstückig ausgebildet sind.

7. Fahrradgriff nach einem oder mehreren der Ansprüche 1 bis 6,
**dadurch gekennzeichnet, dass**
die Längsnuten (6) sich über mindestens 70 % der Gesamtlänge des Grundkörpers (1) erstrecken.

8. Fahrradgriff nach einem oder mehreren der Ansprüche 1 bis 7,
**dadurch gekennzeichnet, dass**
die Längsnuten (6) eine Breite im Bereich von 0,5 - 3 mm aufweisen.

9. Fahrradgriff nach einem oder mehreren der Ansprüche 1 bis 8,
**dadurch gekennzeichnet, dass**
das Durchmesserinnenmaß des Grundkörpers (1) im Bereich von 0,4 - 1 mm größer bemessen ist als der Innendurchmesser einer zu bestückenden Lenkstange.

10. Fahrradgriff nach einem oder mehreren der Ansprüche 1 bis 9,
**dadurch gekennzeichnet, dass**
das Griffelement (2) an seiner Außenkontur mit einer einseitig über den Durchmesser vorstehenden Handauflagefläche (12) versehen ist.

11. Fahrradgriff nach einem oder mehreren der Ansprüche 2 bis 10,
**dadurch gekennzeichnet, dass**
die umlaufenden Längsnuten (6) des Grundkörpers (1) in ihrer Längsstreckung eine gebogene Kontur aufweisen.

12. Fahrradgriff nach einem oder mehreren der Ansprüche 1 bis 11,
**dadurch gekennzeichnet, dass**
das Klemmringelement (3) mit einem Innenkonus (15) und der Grundkörper (1) in seinem Befestigungsbereich (5) mit einem korrespondierenden Außenkonus (13) versehen ist.

13. Fahrradgriff nach Anspruch 12,
**dadurch gekennzeichnet, dass**
das Klemmringelement (3) durch eine Axialzugvorrichtung auf den Außenkonus (13) des Grundkörpers (1) ziehbar und festlegbar ist.

14. Fahrradgriff nach einem oder mehreren der Ansprüche 12 bis 13,
**dadurch gekennzeichnet, dass**
der Außenkonus (13) des Grundkörpers (1) mindestens mit einem parallel zur Mittellängsachse umlaufenden Klemmschlitz (18) versehen ist.

15. Fahrradgriff nach Anspruch 14,
**dadurch gekennzeichnet, dass**
Ober den Umfang des Grundkörpers (1) eine Mehrzahl von Klemmschlitzen (18) verteilt angeordnet ist.

16. Fahrradgriff nach einem oder mehreren der Ansprüche 2 bis 15,
**dadurch gekennzeichnet dass**
die Längsnuten (6) im Grundkörper (1) die gesamte Wanddicke von der Innenseite zur Außenseite des Grundkörpers (1) durchgreifen.
